Europäisches Patentamt

(19) European Patent Office

Office européen des brevets

(11) EP 0 889 644 A1

(12) **EUROPEAN PATENT APPLICATION**
published in accordance with Art. 158(3) EPC

(43) Date of publication:
07.01.1999 Bulletin 1999/01

(21) Application number: 97950432.1

(22) Date of filing: 26.12.1997

(51) Int. Cl.$^6$: **H04N 5/335**

(86) International application number:
PCT/JP97/04897

(87) International publication number:
WO 98/30022 (09.07.1998 Gazette 1998/27)

(84) Designated Contracting States:
DE FR GB SE

(30) Priority: 26.12.1996 JP 357008/96

(71) Applicant: SONY CORPORATION
Tokyo 141 (JP)

(72) Inventors:
• KIRIYAMA, Hiroshi,
Sony Corporation
Tokyo 141 (JP)

• OGAWA, Tetsuo,
Sony Corporation
Tokyo 141 (JP)

(74) Representative:
Cotter, Ivan John et al
D. YOUNG & CO.
21 New Fetter Lane
London EC4A 1DA (GB)

(54) **HIGH RESOLUTION IMAGE ACQUISITION DEVICE AND IMAGE CAPTURING METHOD**

(57)    Transmitted light through a film which is obtained by applying projected light to an image information recording region of the film is directed to a photoelectric conversion means to acquire the image information by the photoelectric conversion. A deflecting means which deflects the transmitted light is provided. A 1st group of image information is acquired by the photoelectric conversion of the 1st transmitted light which is the transmitted light before the deflection by the deflecting means and is transmitted through a 1st recording region in the recording region. A 2nd group of image information is acquired by the photoelectric conversion of the 2nd transmitted light which is the transmitted light after the deflection by the deflecting means and is transmitted through a 2nd recording region in the recording region. The 1st image information group and the 2nd image information group are combined to generate synthesized image information. Thus a high resolution image acquisition device by which the high resolution image information can be acquired from the film with a simple construction can be realized.

FIG. 6

## Description

Field of the Invention

This invention is directed to a high resolution image acquisition apparatus and its method, and suitably applicable to, for instance, a telecine apparatus for converting an image which has been recorded on a movie film into a video signal.

Description of the Prior Art

Heretofore, as an apparatus for converting an image which has been recorded on a movie film into a video signal and to record it on a magnetic tape and such, there is a projecting apparatus named a telecine apparatus, whose configuration is a combination of a projector and a video camera apparatus. In this telecine apparatus, the light of the light source is thrown on the image pick-up system of the video camera via a film, so that the image on the film is taken in as the video signal. As to film feeding, there are intermittent feed technique in which each frame of the film is positioned on the optic axis of the lens of the video camera one by one, and continuous feed technique in which the film is fed at a constant velocity.

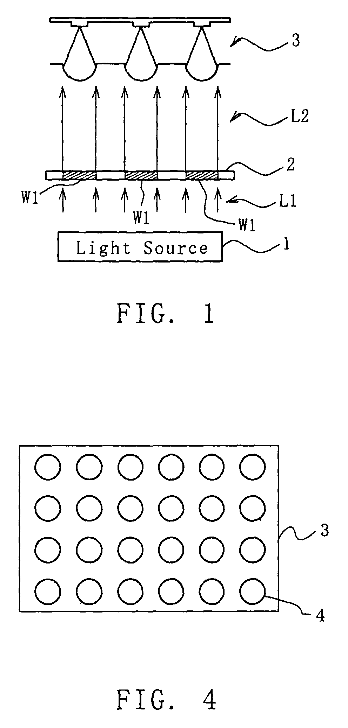

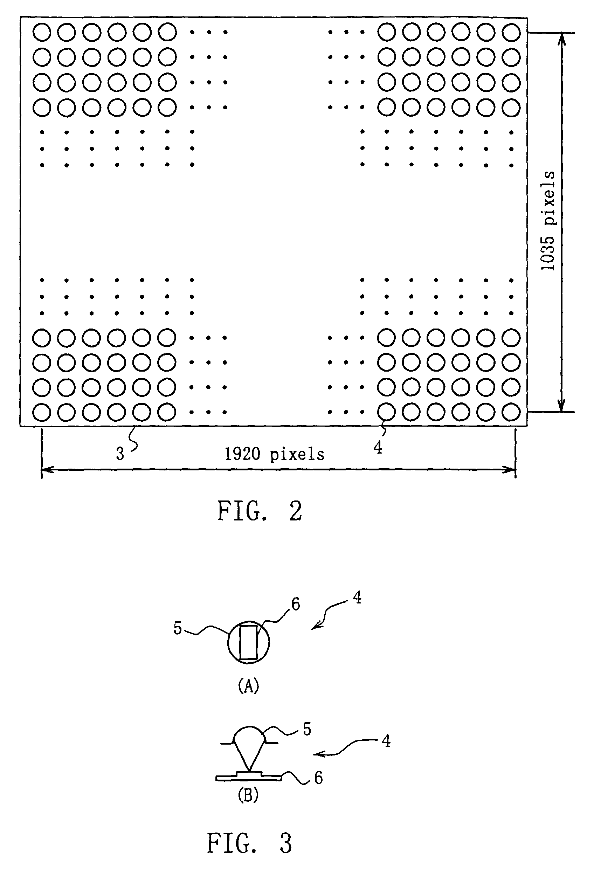

In any feeding technique, in the telecine apparatus, as shown in Fig. 1, the projection light L1 is projected on the surface of the film 2 orthogonally from a light source 1, and the transmitted light L2 which has passed through the film 2 is received by an image pick-up device 3 in the video camera, so that the image information which has been recorded on the film 2 is obtained as the video signal. In more concrete terms, the image information is taken in by receiving the transmitted light L2 which has passed through the film 2 with the respective light receiving elements 4 of a CCD (Charge Coupled Device) 3, which is an image pick-up device, as shown in Fig. 2.

Besides, in each light receiving element 4, as shown in Figs. 3 (A) and 3 (B), the transmitted light L2 which is thrown is condensed on the photo sensor 6 by the lens 5, and the image information carried by the transmitted light L2 is subjected to photoelectric conversion and taken out as a video signal.

In this way, the telecine apparatus takes in the image information which has been recorded on the film 2 and converts it into the video signal, without reference to film feeding technique.

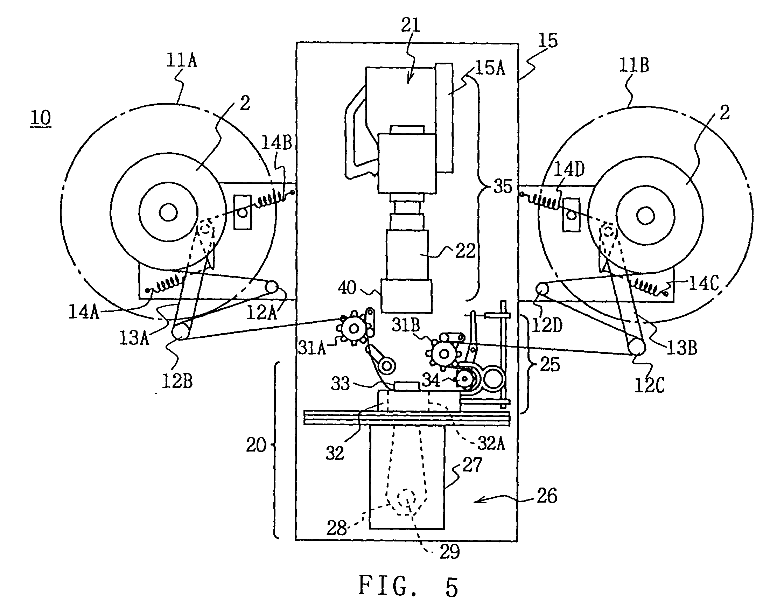

By the way, in the telecine apparatus having such configuration, image information which can be obtained from the film 2 is only image information which is received by the respective light receiving elements 4 arranged on the surface of the CCD 3, as shown in Fig. 4.

That is, though the projection light L1 which is projected from the light source 1 is thrown on the whole surface of the film 2, the image information which can be actually taken in from the transmitted light L2 of the film 2 is limited by the light receiving regions of the respective light receiving elements 4 of the CCD 3, and the image information carried by the transmitted light L2 which is thrown on the gap region between the respective light receiving elements 4 can not be taken in.

In a telecine apparatus which uses a CCD 3, in which plural light receiving elements 4 are thus collected to form a light receiving surface, as image pick-up device, image information which can be taken in from the film 2 is limited by the number of the elements of the light receiving surface of the CCD 3; therefore, to improve the resolution of the video signal, a high-density light receiving device, which is expensive, must be employed.

Besides, in the case where the resolution of the CCD 3 has been enhanced, it is necessarily required to enhance the characteristics of the lens of the video camera also, and so the configuration of the whole apparatus is complicated and the cost is increased.

Summary of the Invention

Considering aforementioned respects, this invention proposes a high resolution image acquisition apparatus and its method in which the images which have been recorded on a film can be converted into a high-resolution video signal with a simple configuration.

To solve such problems, the present invention proposes a high resolution image acquisition apparatus for throwing the transmitted light of the film, which is obtained by throwing the projected light on the image-information recording region of the film, on photoelectric conversion means, and thereby acquiring the image information by photoelectric conversion based on the photoelectric conversion means, said apparatus comprising: deflecting means which have been placed on the optical path of the transmitted light which have passed through the film, and adapted to deflection of the transmitted light; photoelectric conversion means for receiving the first transmitted light which has been not deflected yet by the deflecting means and which have passed through the first recording region exists in the recording region and for performing photoelectric conversion of it so as to obtain the first image information, and for receiving the second transmitted light which has been deflected by the deflecting means and which has passed through the second recording region exists in the recording region and for performing photoelectric conversion of it so as to obtain the second image information; and image synthesis means for synthesizing the synthetic image information with the first and the second image information which has been obtained by the photoelectric conversion means. The second image information can be obtained in this way, and when this second image information and the first image information are combined, the high-resolution synthetic image information can be obtained.

In this way, as stated above, the present invention makes it possible to realize a high resolution image acquisition apparatus for acquiring a high resolution image information from a film with a simple configuration, by providing the deflecting means for deflecting the transmitted light, receiving the first transmitted light which has been not deflected yet by the deflecting means and which have passed through the first recording region and performing photoelectric conversion of it so as to obtain the first image information, receiving the second transmitted light which has been deflected by the deflecting means and which have passed through the second recording region and performing photoelectric conversion of it so as to obtain the second image information, and then synthesizing the synthetic image information with these first and second image information.

Brief Description of the Drawings

Fig. 1 is a schematic diagram used for explanation of conventional taking in of a film image.
Fig. 2 is a schematic diagram showing the light receiving surface of a CCD.
Fig. 3 is a schematic diagram showing a configuration of a light receiving element.
Fig. 4 is a schematic diagram used for explanation of image information which is taken in.
Fig. 5 is a front elevation illustrating a general configuration of a telecine apparatus according to the present invention.
Fig. 6 is a schematic diagram showing a configuration of the image pick-up apparatus.
Fig. 7 is a schematic diagram used for explanation of taking in of the image information and generation of the interpolating image information.
Fig. 8 is a schematic perspective view showing a configuration of the optical path deflecting division according to the present invention.
Fig. 9 is a schematic diagram used for explanation of the optical paths of the transmitted light with respect to the glass plate.
Fig. 10 is a schematic diagram used for explanation of film image which is taken in by image acquisition of the second time.
Fig. 11 is a timing chart used for explanation of taking-in processing of the film image.
Fig. 12 is a schematic diagram used for explanation of taking in of the image information and generation of the interpolating image information according to the other embodiment.

Description of the Preferred Embodiments

One embodiment of the present invention is described below in detail, referring to the drawings.

(1) General Configuration of Telecine Apparatus

The telecine apparatus of this embodiment is based on intermittent feed technique in which a film is fed one frame at a time. Referring to Fig. 5, the whole of the telecine apparatus according to the present invention is designated as 10. The film 2 which has been lapped around a supply reel 11A is fed to a projector division 20, via a roller 12A, and a roller 12B of a tension arm 13A. In this connection, the tension arm 13A, which is located at the stated position by the biasing force of springs 14A and 14B, applies the stated tension toward the film 2.

The film 2 is fed into the projector division 20 with a constant velocity, by a supply side continuous-feed sprocket 31A of the projector division 20. Then, the film 2 is intermittently fed by the intermittent feeder division 25, and located at the suitable position. As used herein, suitable position refers to such a position that the center of a frame of the film which is to be projected exists on the optic axis of the image pick-up lens 22 of the video camera 21, which has been fixed on the camera mount 15A of the supporting plate 15, in the image pick-up apparatus division 35. A light source division 27 is provided underneath the film 2 which has been located; as to this light source division, a light diffuser 28 composed of a dichroic mirror, which transmits the heat ray to the exterior, is provided in the box body 27, and the light source 29 is provided in the light diffuser 28.

The intermittent feeder division 25 is comprised of the supply side continuous-feed sprocket 31A, a take-up side sprocket 31B, an intermittent feed sprocket 34 which has been provided on the take-up reel side, a film gate division 32, and a film suppressing division 33. The supply side sprocket 31A and the take-up side sprocket 31B act as a pair so as to feed the film at a constant velocity; in this constant stream, the intermittent feed sprocket 34 intermittently feeds the film 2, frame by frame.

The film 2 which has been subjected to projection is delivered from the projector division 20, and wound around the take-up reel 11B, via a roller 12C of a tension arm 13B, and a roller 12D. In this connection, the tension arm 13B, which is located at the stated position by the biasing force of springs 14C and 14D, applies the stated tension toward the film 2.

In the intermittent feeder division 25 of the projector division 20, the film 2 which is fed from the supply reel 11A is received by the supply side sprocket 31A which is rotatably born. The sprocket 31A of the supply side receives the torque from a sprocket motor (not shown), which has been installed on the back side of the supporting plate 15, for driving rotationally at a constant velocity, and hereby rotates at the constant velocity, in accordance with this torque. The sprocket 31A of the supply side has plural pins on its peripheral surface, and sends the film 2 by inserting the pins into perforations of the film 2.

The film 2 which has been sent from this supply side sprocket 31A is delivered to a film gate division 32, which is provided as a film positioning means, of the intermittent feeder division 25, with a stated sag. At this time, a film depressing division 33 depresses the upper surface of the film 2 from the above, so as to prevent the film 2 from rising in the height direction (that is, the direction of the optic axis of the image pick-up lens 22). In this way, it is able to prevent the film 2 from displacing in the direction of the optic axis of the image pick-up lens 22, and to prevent the film 2 from becoming out of the focus of the image pick-up lens 22.

An opening 32A of a size which corresponds to one frame (one screen) of the film 2 is formed in the film gate division 32, so as to allow the light which has been projected from the light source 29 of the light source division 26 to impinge, via the opening, on a frame of the film 2 which has been located at the upper side of the opening 32A.

The transmitted light which has been projected through the film 2 in the projector division 20 is passed through the optical path deflecting division 40, and then thrown into the video camera 21 of the image pick-up apparatus division 35, and taken in by the video camera 21. By this, the film image which has been recorded on the frame of the film 2 is converted into an electric video signal.

(2) Constitution of Optical-Path Deflecting Division

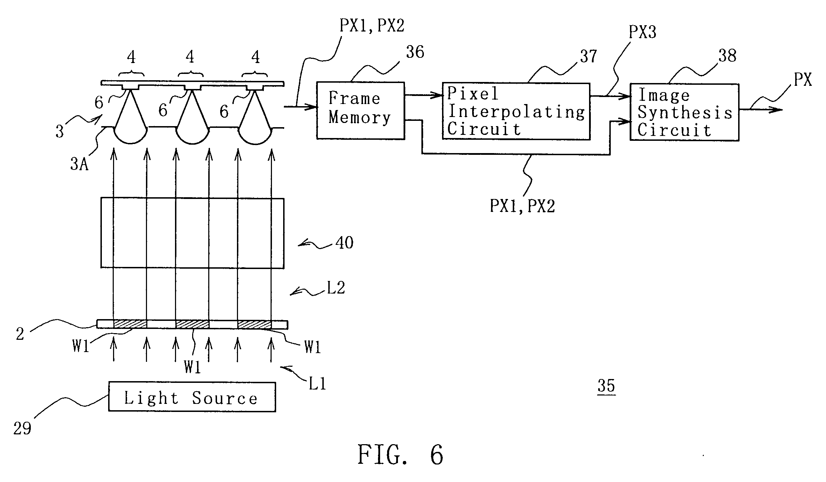

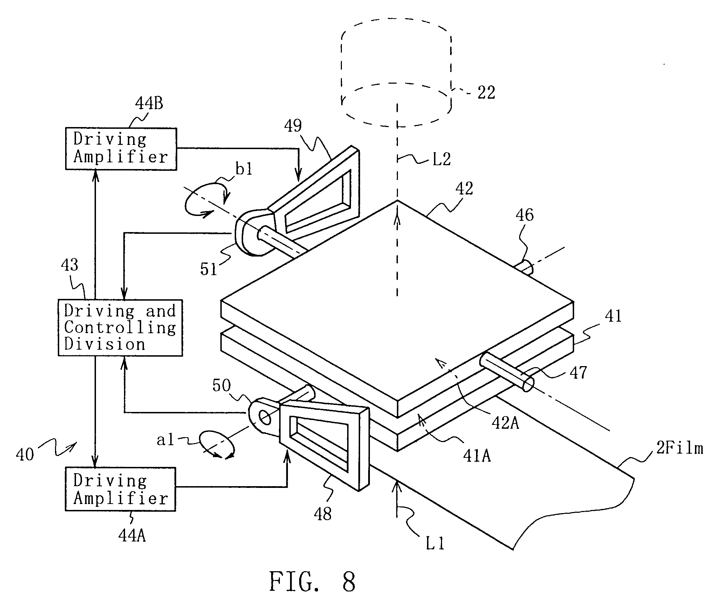

As shown in Fig. 6, the image pick-up apparatus division 35 has an optical path deflecting division 40 as means for deflecting the optical path of the transmitted light L2 which has passed through the film 2, and this optical path deflecting division 40 is arranged at the stated position on the optical path of the transmitted light L2 between the surface of the film 2 and the light-receiving surface 3A of the CCD 3. As shown in Fig. 8, this optical path deflecting division 40 is comprised of a first glass plate 41 and a second glass plate 42, and adapted to controlling the respective inclinations of the glass plates 41 and 42, deflecting the optical path of the transmitted light L2, and correcting displacement of the film 2 in the opening 32A of the film gate division 32. The detail of this optical path deflecting division 40 will be described below.

The quantity of the image information which is taken in through one time of image acquisition of a frame of the film 2 by the CCD 3 is in proportion to the effective area of the light receiving portion of each light receiving element 4 of the CCD 3, which has plural light receiving elements 4 on its plane, and the elements 4 have been regularly arranged. This is due to the fact that, in the CCD 3, the image information is obtained by the transmitted light L2 components which have been led to the respective light receiving elements 4. In other words, this means that the image information carried by the transmitted light L2 components which have been not led to the light receiving elements 4 is abandoned, in the CCD 3. And so, if the transmitted light L2 components which are usually not led to the light receiving elements 4 can be led to the light receiving elements 4, the image information which is obtained from the film 2 is increased.

So, in this image pick-up apparatus division 35, the optical path deflecting division 40 is provided to make it possible to deflect the transmitted light L2, and the transmitted light which has been not deflected yet and the transmitted light which has been deflected are respectively picked up, and hereby the image information is acquired from the different image regions of one and the same frame of the film 2, so that a high resolution video signal is generated.

When the image is picked up from the frame of the film 2, the optical path deflecting division 40 deflects the transmitted light L2, so as to make it possible to take in the image information at least twice or more. In more concrete terms, after image picking up of the first time has been finished, the glass plates 41 and 42 are respectively driven so as to deflect the transmitted light L2 which is projected via the film 2, so that the transmitted light L2 components which have been not led to the light receiving elements 4 of the CCD 3 at the time of image picking up of the first time is led to the light receiving elements 4. By this, the different image information can be taken in from the different image regions of one and the same frame of the film 2.

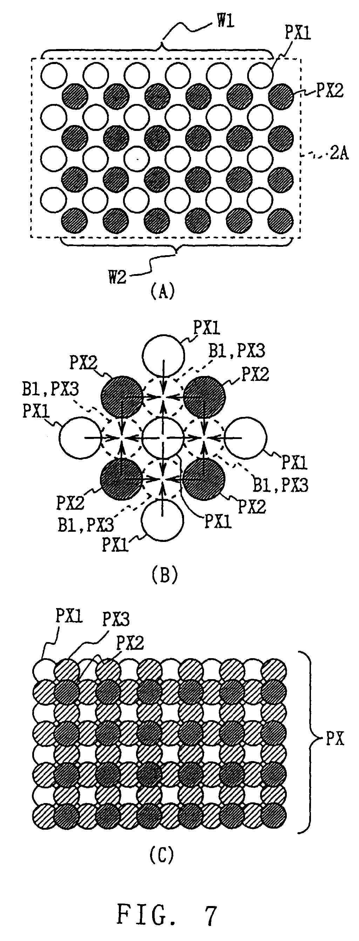

This point is described further concretely, using a conceptual diagram of taking in of the image information shown in Fig. 7. At first, on image picking up of the first time, the transmitted light L2 is not deflected by the optical path deflecting division 40, and the transmitted light L2 which has been led to the light receiving element 4 of the CCD 3 is picked up simply. In this case, as shown in Fig. 7 (A), the transmitted light L2 components which have passed through the image region W1 (shown by white circles, in Fig. 7 (A)) of the frame 2A, which corresponds to the respective light receiving elements 4, are led to the light receiving elements 4, so that the image information PX1 of the image region W1 is taken in, and stored in the frame memory 36.

When image picking-up of the first time has been finished, the glass plates 41 and 42 of the optical path deflecting division 40 are driven, so that the transmitted light L2 which have passed through the film 2 is deflected. By this, as shown in Fig. 7 (A), the transmitted light L2 components which have passed through the image region W2 (shown by black circles, in Fig. 7 (A)) which differ from said image region W1 are led to the light receiving elements 4. Therefore, when image picking-up of the second time has been performed in this state, the image information PX2 of the image region W2 is taken in and stored in the frame memory 36, since the transmitted light L2 components which have passed through the image region W2 are being led to the respective light receiving elements 4.

In this connection, the frame memory 36 should have such a storage capacity that image information of at least two fields can be stored, in order to store the whole image information PX1 and the whole image information PX2 which has been obtained by image picking-up of two times.

The image information PX1 and the image information PX2 which has been thus taken in from one and the same frame 2A of the film 2 through two times of picking-up are respectively stored in the frame memory 36. Utilizing the image information PX1 and PX2 which has been read out from the frame memory 36, a pixel interpolating circuit 37 of the succeeding stage produces the image information PX3, which is the interpolating pixels corresponding to the interpolative positions B1 shown by the arrows in Fig. 7 (B), and then delivers it to an image synthesis circuit 38, as shown in Fig. 6. BY synthesizing the image information PX1 and PX2 which has been read out from the frame memory 36 and the image information PX3, the interpolating pixels, which is sent from the pixel interpolating circuit 37, the image synthesis circuit 38 produces the high resolution image information PX which is comprised of the image information PX1 - PX3, and then outputs this as a video signal, as shown in Fig. 7 (C).

Next, the optical path deflecting division 40 is explained, referring to Fig. 8. As shown in Fig. 8, the glass plates 41 and 42 of the optical path deflecting division 40 are comprised of the parallel glass plate members which have the identical refractive index, and the parallel glass plate members are arranged such that their parallel planes are opposed to each other. Besides, both glass plates 41 and 42 are positioned between the image pick-up lens 22 of the image pick-up apparatus division 35 and the film 2. The projected light L1 which is emitted from the light source 29 is uniformly thrown on the surface of the film 2 in parallel, passed through the glass plates 41 and 42, led to the image pick-up lens 22, and then led to the light-receiving surface 3A of the CCD 3 via the very image pick-up lens 22.

In the optical path deflecting division 40, the inclinations of the glass plates 41 and 42 toward the light receiving surface 3A and the surface of the film 2 are controlled and driven by the driving and controlling division 43 via the driving amplifiers 44A and 44B, so that the incident angles of the transmitted light L2 which is thrown on the glass surfaces 41A and 42A of the glass plates 41 and 42 are controlled.

In this case, the glass plate 41 is fixed to the rotary drive shaft 46 which has been placed along the width direction of the film 2; the plate 41 would be rotated upon the rotary drive shaft 46, when a driving force is given to this rotary drive shaft 46 by the drive coil 48. Since the glass plate 41 rotates upon the rotary drive shaft 46 in this way, it is able to vary the inclination of the glass plane 41A with respect to the longitudinal direction of the film 2. While, the glass plate 42 is fixed to the rotary drive shaft 47 which has been placed along the longitudinal direction of the film 2; the plate 42 would be rotated upon the rotary drive shaft 47, when a driving force is given to this rotary drive shaft 47 by the drive coil 49. Since the glass plate 42 rotates upon the rotary drive shaft 47 in this way, it is able to vary the inclination of the glass plane 42A with respect to the width direction of the film 2.

The drive coils 48 and 49 are equipped with angle sensors 50 and 51 for detecting angle of rotation, which are respectively composed of rotary encoders or such. By controlling the inclination angles of the glass plates 41 and 42 toward the light-receiving surface 3A of the CCD 3 while obtaining the rotation angle information from the angle sensors 50 and 51, the driving and controlling division 43 controls the inclination angles of the glass plates 41 and 42 such that they become the desired angles.

Next, inclination controlling of the glass plates 41 and 42 is explained more concretely. That is, the first glass plate 41 is driven and rotated upon the rotary drive shaft 46 in a rotational direction which is shown by the arrow a1, on the basis of rotation controlling of the drive coil 48 which is performed via the driving amplifier 44A. As a result of this, the incidence angle of the transmitted light L2 which is thrown on the glass plate 41 is controlled with respect to the first direction, which is the longitudinal direction of the film 2. While, the second glass plate 42 is driven and rotated upon the rotary drive shaft 47, which is perpendicular to the rotary drive shaft 46, in the second direction which is shown by the arrow b1 (that is, a direction which is perpendicular to the first direction), on the basis of rotation controlling of the drive coil 49 which is performed via the driving amplifier 44B. As a result of this, the incidence angle of the transmitted light L2 which is thrown on the glass plate 42 is controlled with respect to the second direction.

When the inclination angles of the glass plates 41 and 42 are varied in this way, the incidence angles of the transmitted light L2 which has passed through the film 2 are varied with respect to the glass plates 41 and 42, and so the transmitted light L2 is refracted on the glass plates 41 and 42, as a result, the optical path of the transmitted light L2 is moved to the first and the second directions. By this, the optical path of the transmitted light L2 is shifted by the stated quantity as a whole, on the light receiving surface 3A of the CCD 3, so that the transmitted light L2 components which have passed through the image region W2 of the film 2 can be led to the respective light receiving elements 4 of the CCD 3, as stated above (see Fig. 7).

Thus, in the optical path deflecting division 40, the respective angles of the glass plates 41 and 42 toward the surface of the film 2 are varied, and so the incidence angles of the transmitted light L2, which has came from the film 2, toward the glass plates 41 and 42 are varied, so that the aiming position of the transmitted light L2 can be shifted toward the first and the second directions, on the surface of the CCD 3. In this connection, when only the angle of any one of the glass plate 41 and the glass plate 42 has been varied, the transmitted light L2 would be deflected to the corresponding only one direction out of the first and the second directions, as might be expected.

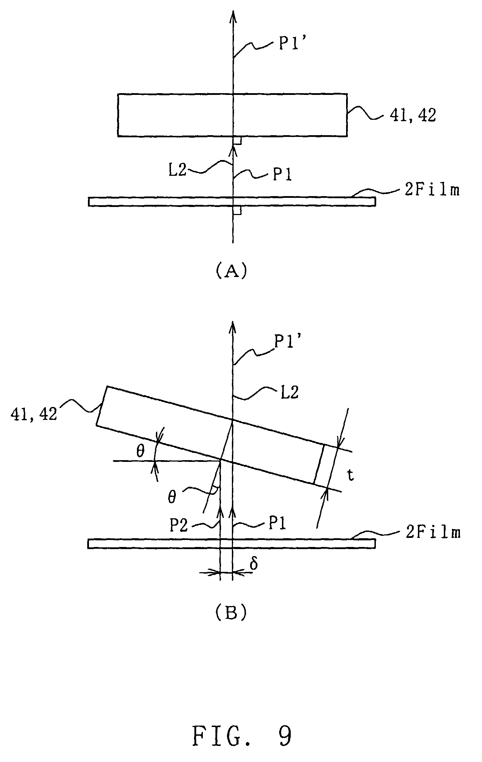

At this point, deflection of the transmitted light L2 in the optical path deflecting division 40 is explained, using the conceptual diagram of deflection shown in Fig. 9. As shown in Fig. 9 (A), when the projected light L1 has been thrown on the surface of the film 2 perpendicularly, the transmitted light L2 which has passed through the film 2 is projected in a perpendicular direction with respect to the film 2. At this time, if the glass plates 41 and 42 have been set such that they are parallel to the surface of the film 2, then the transmitted light L2 is thrown to the glass plates 41 and 42 perpendicularly also, and projected in a perpendicular direction from the glass plates 41 and 42 also. Accordingly, in this case, the optical path P1 and the optical path P1', of before and after passing through the glass plates 41 and 42, of the transmitted light L2 are aligned on the identical line. By this principle, the transmitted light L2 components which have passed through the image region W1 of the frame of the film 2 shown in Fig. 6 are led to the respective light receiving elements 4 of the CCD 3, without being refracted by the glass plates 41 and 42.

On the other hand, in the case where the glass plates 41 and 42 have been tilted by an angle θ [° ] with respect to the surface of the film 2, the incidence angle of the transmitted light L2 toward the glass plates 41 and 42 becomes θ, as a result, the transmitted light L2 is refracted when it passes through the glass plates 41 and 42, as shown in Fig. 9 (B). In this way, when the glass plates 41 and 42 have been tilted by θ, the transmitted light L2 which has passed through the optical path P2 is projected on the projection optical path P1', as shown in Fig. 9 (B); in contradiction to the fact that when the glass plates 41 and 42 have been set in parallel to the film 2, the transmitted light L2 which has passed through the optical path P1 is projected on the projection optical path P1', as shown in Fig. 9 (A). Therefore, the optical path of the transmitted light L2 which have passed through the glass plates 41 and 42 is shifted by a transference quantity δ, owing to refraction effect of the glass plates 41 and 42. This transference quantity δ of the optical path is the transference quantity of the transmitted light L2 on the light-receiving surface 3A of the CCD 3, exactly. This transference quantity δ is represented by the following equation

$$\delta = t \times \sin\theta \, (1 - \cos\theta \, / \, n^2 \sin\theta^2) \qquad (1)$$

where t denotes the thickness of the glass plates 41 and 42, and n denotes the refractive index.

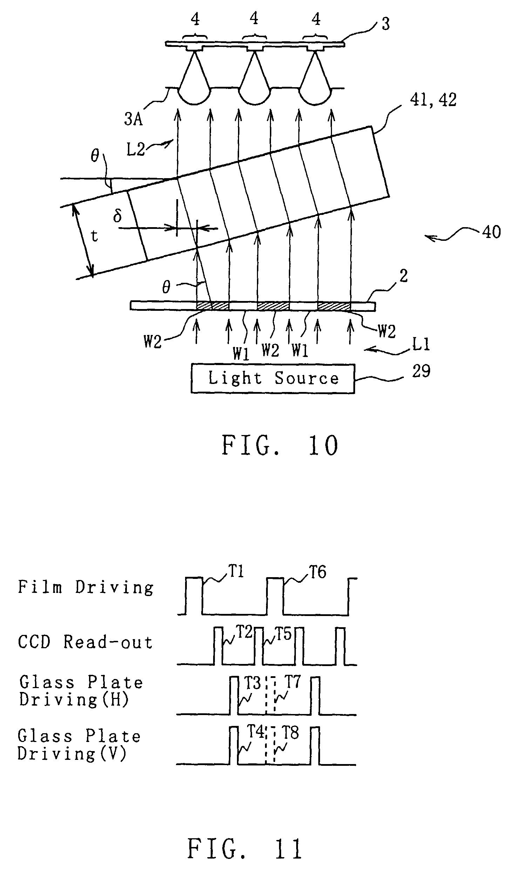

In the case where the angle of the glass plates 41 and 42 has been thus tilted by θ with respect to the surface of the Film 2, the transmitted light L2 is refracted by the glass plates 41 and 42, and its optical path is shifted by the transference quantity δ, therefore, as shown in Fig. 10, the transmitted light L2 components which have passed through the image region W2 which resides at the positions shifted from the image region W1 by the transference quantity δ are led to the respective light receiving elements 4 of the CCD 3.

Thus, by varying the angles of the glass plates 41 and 42 toward the surface of the Film 2 in this way in the optical path deflecting division 40, it is able to lead the transmitted light L2 which have passed through the different image regions W1 and W2 of one and the same frame to the respective light receiving elements 4 of the CCD 3.

Therefore, it is able to take the image information PX1 and PX2, which has been recorded on the different image regions W1 and W2 of one and the same frame of the film 2 in the frame memory 36, by two times of image picking-up and taking-in operations of the CCD 3, and so it is able to take in the image information PX2 of the image region W2, so that it is able to take in the image information of the quantity about two times the conventional quantity.

Besides, in the image pick-up apparatus division 35, interpolating pixels are generated in addition by the pixel interpolating circuit 37, using the image information PX1 and PX2, therefore, image information of the quantity four times the conventional quantity can be obtained as a whole, as shown in, for instance, Fig. 7 (C).

### (3) Operation and Effects of the Embodiment

In the above configuration, when the film 2 has been transferred to the film depressing division 33 by rotation of the supply side sprocket 31A, the film 2 is located on the film gate division 32, and taking in of the image information of the frame is commenced by the image pick-up apparatus division 35.

At this point, this image information taking-in operation is explained, using the timing chart shown in Fig. 11. As to taking in of the image information of a frame which has been recorded on the film 2, when a frame of the film 2 has been replaced with the next new frame (T1) and the film 2 is positioned, at first, taking in of the image information of the first time is executed by the CCD 3 (T2), as shown in Fig. 11. The image information PX1 of the image region W1 of the film 2 is taken in by the CCD 3, and then stored in the frame memory 36.

Next, in the optical path deflecting division 40, the optical path of the transmitted light L2 of the image of the frame is shifted by a half pixel (a half pitch) in the first direction, by driving and controlling the glass plate 41 (T3), while the optical path of the transmitted light L2 of the image of the frame is shifted by a half pixel in the second direction, by driving and controlling the glass plate 42 (T4). As a result of this, the image information of the frame of the film 2 which is thrown on each light receiving element 4 of the CCD 3 transfers from the image information PX1 of the image region W1 to the image information PX2 of the image region W2, which is shifted in the first and the second directions by the transference quantity δ as a whole.

Taking in of the image information of the second time is performed by the CCD 3 at this point (T5), and the image information of the image region W2 is taken in by the CCD 3 and then stored in the frame memory 36. In this way, as shown in Fig. 7 (A), it is able to take the image information PX1 of the image region W1, which exists on the film 2 and which is represented by the white circles, in the frame memory 36, along with the image information PX2 of the image region W2, which exists on the film 2 and which is represented by the black circles.

When the succeeding new frame for projection of the film 2 has been transferred (T6) and positioned there, the optical path of the transmitted light L2 is returned by a half pixel in the first direction due to driving and controlling of the glass plate 41 (T7), and also the optical path of the transmitted light L2 is returned by a half pixel in the second direction due to driving and controlling of the glass plate 42 (T8), in the optical path deflecting division 40. As a result of this, the glass plates 41 and 42 are set to the initial state again wherein they are parallel to the surface of the film 2 and the light receiving surface 3A, and then taking in of the image information of the next frame is commenced.

The pixel interpolating circuit 37 generates interpolating pixels of the interpolating positions B1 as the image information PX3, utilizing the image information PX1 and PX2 which has been taken in the frame memory 36, as shown in Fig. 7 (B). By this, the image information PX which is comprised of the image information PX1, PX2 and PX3 can be obtained, as shown in Fig. 7 (C). Thus, image information is increased by the quantity of the image information PX2 and PX3 at the image pick-up apparatus division 35, in spite of the fact that the conventional CCD 3 is being used, therefore, it is able to obtain image information four times as much as that of the conventional case, and to generate the high resolution video signal.

According to the above configuration, when the image information of a frame on the film 2 which has been positioned on the film gate division 32 is taken in by the CCD3, after the image information has been taken in from the image region W1 of the film 2 by image picking-up of the first time, the optical path of the transmitted light 12 of the film 2 is shifted, by the optical path deflecting division 40, in the first and the second directions with respect to the light-receiving surface 3A of the CCD 3 by a half pixel respectively, and then taking in of the image of the second time is executed; therefore, it is able to take in the image information PX2 of the image region W2, which has been thrown on the gap of the pixels of the light receiving elements 4 at the time of image picking-up of the first time, in addition to the image information PX1 of the image region W1 on the film 2, by means of the respective light receiving elements 4 of the CCD3.

Moreover, since the pixel interpolating circuit 37 has been adapted to generating and interpolating the image information PX3 utilizing the image information PX1 and PX2 (Fig. 7 (C)), it is able to take in image information four times as much as that of the conventional case, as a whole. In this way, it is able to take in more image information than the usual from the film 2 using a simple configuration, and to generate the high resolution video signal, on the basis of the image information which has been thus taken in.

(4) Other Embodiments

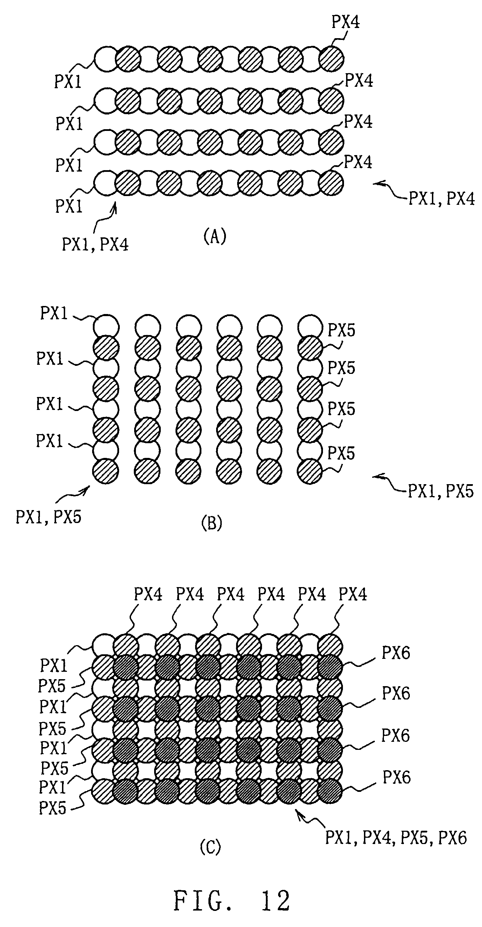

In the above embodiment, the description has been given of the case where the image information PX1 of a frame image has been taken in by the CCD 3 at the first time, on the standard position on which the frame of the film 2 has been placed, and then the image information PX2 has been taken in of the frame image of such a position that the optical path of the transmitted light 12 of the film 2 is shifted in the first and the second directions by a half pixel respectively by the optical path deflecting division 40, and the image information PX3 is interpolated and generated utilizing these image information PX1 and PX2; however we do not intend to limit the present invention to this case. For instance, as shown in Fig. 12, it is preferable that the image information PX1 of a frame image is taken in by the CCD 3 on the standard position at the first time, and the image information PX4 of the position which has been shifted to the first direction by a half pixel with respect to the image information PX1 is taken in at the second time (Fig. 12 (A)), besides, the image information PX5 of the position which has been shifted to the second direction by a half pixel with respect to the image information PX1 is taken in at the third time (Fig. 12 (B)), and the image information PX6, which is the interpolating pixels, is newly generated and interpolated by the pixel interpolating circuit 37 utilizing these image information PX1, PX4 and PX5 as shown in Fig. 12 (C), and then the image information PX1, PX4, PX5 and PX6 are synthesized by the image synthesis circuit 38, so that the image information PX is produced hereby. In brief, directions of shifting, on the frame, effected by the optical path deflecting division 40 and numbers of projection and taking-in of the image may be set arbitrarily.

Besides, in the above embodiment, the description has been given of the case where two glass plates 41 and 42, which are composed of parallel glass plates, have been used as the deflecting means for deflecting the transmitted light L2, however we do not intend to limit the present invention to such; the transmitted light L2 may be deflected using one sheet of parallel glass plate. Besides, as to material of the parallel plate, for instance quartz and others may be used other than glass. Moreover, deflecting and controlling of the optical path may be performed using an optical member, such as a prism, other than a parallel plate.

Moreover, aiming direction of the transmitted light L2 may be deflected by the use of an acoustooptic effect device, and others; in brief, one may be used which is able to shift the transmitted light L2 which comes from the film 2, at the light receiving surface 3A of the CCD 3.

Besides, in the above aspects of implementation, the description has been given of the cases where a CCD 3 which is comprised of light receiving elements arranged on a two-dimensional plane has been used as the image pick-up device, however we do not intend to limit the present invention to such; light receiving elements which have been arranged linearly may be used so as to receive the transmitted light L2, and image project operation and image taking-in operation may be repeated plural times, so that the image of the frame is taken in with high resolution.

Besides, in the above aspects of implementation, a telecine apparatus 10 for converting the image which has been recorded on a movie film into a video signal has been described, however we do not intend to limit the present invention to such; the present invention is widely applicable to various image pick-up apparatuses for converting the image which has been recorded on a film to a video signal, so as to realize a high resolution image acquisition apparatus.

Industrial Applicability

The present invention can be applied to such a case where the image information which has been recorded on a movie film is to be converted into a video signal, in a broadcasting station.

DESCRIPTION OF REFERENCE NUMERALS

1・・・・・・light source, 2・・・・・・film, 3・・・・・・image pick-up device (CCD), 4・・・・・・light receiving element, 5・・・・・・lens, 6・・・・・・photo sensor, 10・・・・・・telecine apparatus, 11A・・・・・・supply reel, 11B・・・ ・・・take-up reel, 12A - 12D・・・・・・roller, 13A and 13B・・・・・・tension arm, 14A - 14D・・・・・・spring, 20・・・・・・projector division, 21・・・・・・ video camera, 22・・・・・・image pick-up lens, 25・・・・・・intermittent feeder division, 26・・・・・・light source division, 27・・・・・・ enclosure, 28・・・・・・light diffuser, 29・・・・・・light source, 31A・・・・・・ supply-side continuous feed sprocket, 31B・・・・・・take-up side sprocket, 32・・・・・・film gate division, 32A・・・・・・ opening, 33・・・・・・ film suppressing division, 34・・・・・・intermittent feed sprocket, 35・・・・・・image pick-up apparatus division, 36・・・・・・frame memory, 37・・・・・・pixel interpolating circuit, 38・・・・・・image synthesis circuit, 40・・・・・・optical path deflecting division, 41・・・・・・first glass plate, 41A and 42A・・・・・・glass plane, 42・・・・・・second glass plate, 43・・・・・・driving and controlling division, 44A and 44B・・・ ・・・driving amplifier, 46 and 47・・・・・・rotary drive shaft, 48 and 49・・・・・・drive coil, 50 and 51・・・・・・angle sensors, L1・・・・・・projected light, L2・・・・・・transmitted light, P1, P2 and P'・・・・・・optical path, W1 and W2・・・・・・image region, PX1 - PX5・・・・・・image information.

**Claims**

1. A high resolution image acquisition apparatus for photoelectric conversion means receiving a transmitted light through a film obtained by projecting a projection light toward the recording region of said film recorded a image information, and for acquiring said image information with photoelectric conversion performed by said photoelectric conversion means, said high resolution image acquisition apparatus comprising:

   deflecting means provided on the optical path of said transmitted light passing through said film, for deflecting said transmitted light; photoelectric conversion means for acquiring the first image information by receiving said transmitted light which has not been deflected by said deflecting means yet, and by performing photoelectric conversion on the first transmitted light which has passed through the first recording-region existing in said recording area, and for acquiring the second image information by receiving said transmitted light after deflected by said deflecting means and by performing photoelectric conversion on the second transmitted-light which has passed through the second recording-region existing in said recording region; and image synthesis means for generating the synthetic image information by synthesizing said first and second image information obtained by said photoelectric conversion means.

2. The high resolution image acquisition apparatus according to claim 1, further comprising:

   storage means having a storing capacity of at least more than two fields, for storing said first and second image information obtained by said photoelectric conversion means.

3. The high resolution image acquisition apparatus according to claim 2, wherein

said storage means are formed of a frame memory.

4. The high resolution image acquisition apparatus according to claim 1, wherein said deflecting means comprising:

a parallel glass plate member having a predetermined refractive index; and

driving and controlling means for controlling the angle of incidence of said transmitted light toward said parallel glass plate by controlling the inclination of said parallel glass plate, and for deflecting said transmitted light.

5. The high resolution image acquisition apparatus according to claim 4, wherein

said parallel glass plate member comprising a first movable parallel glass plate in the longitudinal direction of said film, and a second movable parallel glass in the direction perpendicular to said longitudinal direction.

6. The high resolution image acquisition apparatus according to claim 1, further comprising:

interpolation means for generating the interpolating image information based on said first and second image information stored in said storage means; and

said image synthesis means for generating said synthetic information by synthesizing said first and second image information and said interpolating image information together.

7. A high resolution image acquiring method for photoelectric conversion means receiving a transmitted light through a film obtained by projecting a projection light toward the recording region of said film recorded a image information, and acquiring said image information with photoelectric conversion performed by said photoelectric conversion means, said high resolution image acquisition apparatus comprising the steps of:

a first image information taking-in step of photoelectric conversion means receiving a first transmitted light which has passed through the first recording-region existing in said recording area, and of acquiring the first image information ; and

a second image information taking-in step of photoelectric conversion means receiving a second transmitted light which has passed through the second recording-region existing in said area recording by deflecting said transmitted light, and of acquiring the second image information:

an image synthesis step of synthesizing said first and second image information to generate synthetic image information.

8. The high resolution image acquiring method according to claim 7, wherein said image synthesis step comprises the steps of:

generating the interpolating image information based on said first image information and said second image information; and

generating said synthetic information by synthesizing interpolating image information and said first and second image information together.

9. The high resolution image acquiring method according to claim 7, wherein said second image-information taking-in step comprises the steps of:

controlling the inclination of a parallel glass plate member having a predetermined refractive index;

controlling the angle of incidence of said transmitted light toward said parallel glass plate; and

deflecting the transmitted light.

10. The high resolution image acquiring method according to claim 9, wherein said second image-information taking-in step comprises the steps of:

driving and controlling said first parallel glass plate member comprising a first parallel glass plate in the longitudinal direction of said film;

driving and controlling said second parallel glass plate member comprising a second parallel glass plate in the direction perpendicular to said longitudinal direction of said film; and

thereby deflecting said transmitted light.

FIG. 1

FIG. 4

FIG. 2

FIG. 3

FIG. 5

FIG. 6

FIG. 7

EP 0 889 644 A1

FIG. 8

(A)

(B)

FIG. 9

FIG. 10

FIG. 11

FIG. 12

## INTERNATIONAL SEARCH REPORT

| | International application No. |
|---|---|
| | PCT/JP97/04897 |

**A. CLASSIFICATION OF SUBJECT MATTER**

Int. Cl$^6$  H04N5/335

According to International Patent Classification (IPC) or to both national classification and IPC

**B. FIELDS SEARCHED**

Minimum documentation searched (classification system followed by classification symbols)

Int. Cl$^6$  H04N5/30-5/335

Documentation searched other than minimum documentation to the extent that such documents are included in the fields searched

Jitsuyo Shinan Koho                          1940 - 1998
Kokai Jitsuyo Shinan Koho                1971 - 1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 04-88766, A (Mitsubishi Electric Corp.), March 23, 1992 (23. 03. 92)(Family: none) Fig. 6 | 1-3, 6-8<br>4, 5, 9, 10 |
| Y | JP, 63-284978, A (Fujitsu Ltd.), November 22, 1988 (22. 11. 88)(Family: none) Fig. 5 | 4, 5, 9, 10 |

☐ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| March 3, 1998 (03. 03. 98) | March 17, 1998 (17. 03. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)